# FASCICULE DE BREVET EUROPEEN

(11) **EP 1 153 702 B1**
(45) Date de publication et mention de la délivrance du brevet: **03.11.2004**
(21) Numéro de dépôt: 01401137.3
(22) Date de dépôt: 03.05.2001
(51) Int. Cl.: B23P 19/04, F01L 3/10

(54) **Procédé et dispositif pour la mise en place de demi-cônes dans l'évidement conique d'une coupelle**
Verfahren und Vorrichtung zum Einsetzen von Halbkegeln in der konischen Aussparung eines Federtellers
Method and device for placing of half-cones in the conical recess of a retainer

(30) Priorité: 10.05.2000 FR 0005918
(43) Date de publication de la demande: 14.11.2001
(73) Titulaire: COMAU SYSTEMES FRANCE S.A., 78190 Trappes (FR)
(72) Inventeur: Laigre, Claude, 77950 Rubelles (FR); Gauthier, Bruno, 75020 Paris (FR)
(74) Mandataire: Robert, Jean-Pierre

(56) Documents cités:
- EP-A- 0 328 471
- EP-A- 0 527 088
- US-A- 3 793 999
- PATENT ABSTRACTS OF JAPAN vol. 018, no. 616 (M-1710), 24 novembre 1994 (1994-11-24) -& JP 06 238534 A (ZENUERU OODAADE KK), 30 août 1994 (1994-08-30)
- PATENT ABSTRACTS OF JAPAN vol. 017, no. 229 (M-1406), 11 mai 1993 (1993-05-11) -& JP 04 360736 A (SHINKO ELECTRIC CO LTD), 14 décembre 1992 (1992-12-14)
- PATENT ABSTRACTS OF JAPAN vol. 013, no. 477 (M-885), 27 octobre 1989 (1989-10-27) -& JP 01 188239 A (SHINKO ELECTRIC CO LTD), 27 juillet 1989 (1989-07-27)

## Description

La présente invention concerne un procédé selon le préambule de la revendication 1 et des dispositifs selon les préambules des revendications 3 et 11. De tels procédé et dispositifs sont décrits dans le document EP- 0 527 088.

On rappellera brièvement que chaque soupape, par exemple d'un moteur à combustion, est rappelée contre son siège par un ressort qui prend appui sur une coupelle liée à la queue de soupape au moyen de deux demi-cônes enserrant la queue pourvue d'une ou plusieurs gorges dans chacune desquelles s'insèrent une ou des protubérances des demi-cônes, formant ainsi un coin sur lequel prend appui un évidement conique de la coupelle.

L'assemblage de la coupelle et des demi-cônes sur la queue de soupape requiert généralement que soient préassemblées la coupelle et les demi-cônes ; cet ensemble est alors présenté à proximité de la soupape pour son montage sur la queue de soupape.

L'état de la technique comprend plusieurs types de machines pour réaliser ce préassemblage. La plupart ont pour mode opératoire de présenter un ensemble appairé de demi-cônes dont la petite base est orientée vers le bas, au dessus d'une coupelle dont la grande ouverture est orientée vers le haut, de saisir les deux demi-cônes (par une pince ou un dispositif magnétique par exemple), de rapprocher plus ou moins les demi-cônes de la coupelle, puis de lâcher les demi-cônes pour les laisser tomber dans l'évidement conique de la coupelle.

Par exemple, le document EP N°0 527 088 décrit un dispositif dans lequel la coupelle est placée sous un dispositif d'amenée vertical de demi-cônes appairés qui sont immobilisés par pincement, la coupelle étant alors remontée jusqu'à une hauteur qui déclenche l'ouverture de la pince pour permettre la chute des demi-cônes dans l'évidement conique de la coupelle.

Dans ce mode opératoire, la fin de la trajectoire des demi-cônes n'est pas contrôlée, ce qui est un inconvénient. Il peut s'ensuivre un mauvais positionnement, ou pire, un coincement des demi-cônes dans la coupelle dans une position saillante qui est susceptible d'endommager la machine. En outre, ce mode opératoire nécessite de mettre en oeuvre un dispositif de préhension pour réaliser des opérations de saisie/lâcher des demi-cônes, allongeant d'autant le cycle de pose. On sait par ailleurs que l'échappement des demi-cônes peut présenter des aléas en raison d'adhérence ou de frottement possible entre les demi-cônes et l'organe de préhension.

Ces inconvénients trouvent leur solution grâce aux caractéristiques des revendications indépendantes. A cet effet, elle a pour premier objet un procédé pour garnir de manière automatique une coupelle possédant un évidement conique avec une paire de demi-cônes, selon lequel on agence la paire de demi-cônes pour reconstituer le cône complet, on amène la coupelle et la paire de demi-cônes en alignement vertical, et on introduit la paire de demi-cônes dans la coupelle par un mouvement vertical relatif, en ayant prévu que le cône formé par les demi-cônes et le cône de l'évidement conique de la coupelle aient leur pointe dirigée vers le haut, et que la coupelle soit en surplomb des demi-cônes.

Avantageusement, les demi-cônes reposent sur leur grande base. On conçoit aisément que les demi-cônes reposant sur leur grande base sont très stables. Ils n'ont donc pas à être maintenus lors de l'opération d'assemblage. On évite donc l'utilisation de tout moyen de serrage ou de maintien des demi-cônes.

Dans un premier mode de réalisation de l'invention, on laisse tomber la coupelle pour qu'elle coiffe les demi-cônes. Dans ce mode opératoire, une seule pièce est lâchée, au lieu de deux dans la technique connue, évitant la difficulté du contrôle de leur positionnement relatif lors de leur lâcher.

D'une manière avantageuse, on mettra en oeuvre ce procédé, de telle façon que la coupelle soit rendue stationnaire, tandis qu'un mouvement ascendant positif est imprimé aux demi-cônes.

Cette façon de procéder n'occasionne aucune rupture de contact entre les demi-cônes et le dispositif qui les pousse vers le haut. Le guidage est donc positif tout au long du mouvement, et les aléas d'un lâcher des demi-cônes sont supprimés. On s'assure ainsi de la répétabilité et de la qualité de la mise en place des demi-cônes dans la coupelle.

Un second objet de l'invention réside dans les moyens pour mettre en oeuvre ce procédé, sous la forme d'une machine comportant au moins un dispositif d'amenée des demi-cônes vers un poste d'attente, au moins un dispositif d'amenée des coupelles vers un poste d'assemblage, au moins un dispositif d'introduction des demi-cônes dans la coupelle et au moins un dispositif d'évacuation des coupelles équipées.

On entend par poste d'attente des demi-cônes l'endroit de la machine où sont positionnés les demi-cônes appairés sur leur base avant leur introduction dans la coupelle. On entend par poste d'assemblage l'endroit de la machine où la coupelle est disposée pour recevoir les demi-cônes.

Le dispositif d'introduction est formé d'un poussoir mobile verticalement entre une position basse et une position haute, dont la face supérieure sensiblement horizontale reçoit en position basse les demi-cônes appairés pour en former le poste d'attente. Ce poussoir introduit les demi-cônes dans la coupelle par le mouvement ascendant qui le conduit en position haute.

Les moyens d'amenée sont des couloirs de guidage. Les extrémités de ces couloirs qui coopèrent avec le dispositif d'introduction sont disposés de façon qu'ils délivrent les éléments dans la position qu'ils occupent lors de l'assemblage proprement dit. Ces couloirs s'arrêtent à proximité des postes d'assemblage ou d'attente. Les éléments y sont poussés par la pression des éléments suivants et s'arrêtent dans leurs postes respectifs en butant sur un obstacle prévu à cet effet. Il n'y a alors aucun dispositif à prévoir pour placer les éléments en position sur leurs postes respectifs.

Le dispositif d'évacuation des coupelles équipées pourra également être constitué d'un couloir de guidage, qui récupérera les coupelles dans la position qu'elles occupent sur le poste d'assemblage.

De préférence, les couloir d'amenée et d'évacuation des coupelles possèdent des flancs conformés à la forme extérieure des coupelles, pour en assurer un parfait guidage.

Le couloir d'amenée des demi-cônes transporte et présente ceux-ci sous la forme d'un ensemble de demi-cônes appairés de façon à reconstituer le cône, séparés selon une direction parallèle à l'axe du couloir par une plaque verticale, ceci pour éviter tout blocage de ces paires dans le couloir d'amenée.

En outre, le couloir d'amenée des demi-cônes transportent ceux-ci directement sur leur grande base, de façon à leur conférer une grande stabilité lors de leur transport, et de les présenter directement dans cette position sur le poste d'attente.

L'avance des demi-cônes dans leur couloir pourra être assurée par l'emploi d'un dispositif vibrant, d'un tapis de convoyage, ou de tout autre moyen équivalent.

Selon un mode privilégié de réalisation de la machine, le poste d'assemblage est constitué d'un tiroir à deux positions se déplaçant horizontalement, accueillant un réceptacle conformé qui, dans une première position du tiroir coopère avec le dispositif d'amenée des coupelles, pour en recevoir une. Dans cette position, le réceptacle est exactement en surplomb du poste d'attente des demi-cônes. On y effectue l'opération d'assemblage. A la fin de l'opération, le tiroir est actionné dans sa deuxième position pour faire coopérer le réceptacle avec le dispositif d'évacuation. Lors de la transition entre les deux positions, les coupelles du dispositif d'amenée ne peuvent avancer, car elles sont bloquées par les flancs du tiroir.

Avantageusement, on munira le tiroir de deux réceptacles, de telle façon que dans la première position du tiroir, le premier des réceptacles est en surplomb du poste d'attente des demi-cônes et en regard du dispositif d'amenée des coupelles vide, et le deuxième réceptacle est en regard d'un dispositif d'évacuation. Dans cette position, le premier réceptacle reçoit une coupelle vide, qui se voit alors équipée de ses demi-cônes. Le tiroir est alors actionné dans la deuxième position, pour laquelle le deuxième réceptacle prend la place du premier réceptacle, et le premier réceptacle coopère avec un second dispositif d'évacuation pour évacuer la coupelle équipée à l'étape précédente. Lors de la transition entre les deux positions, les coupelles du dispositif d'amenée ne peuvent avancer, car elles sont bloquées par les flancs du tiroir. Ce mouvement alternatif permet d'éviter de faire effectuer au tiroir un retour à vide, et donc d'optimiser le cycle d'assemblage.

Ce tiroir peut être actionné par un vérin ou un moteur électrique par exemple.

Avantageusement, les coupelles équipées seront forcées dans le dispositif d'évacuation par soufflage de celles-ci au moyen d'une buse qui déloge la coupelle équipée du réceptacle du poste d'assemblage.

Le dispositif d'introduction des demi-cônes dans la coupelle prendra avantageusement la forme d'une tige d'axe vertical dont l'extrémité supérieure est destinée à servir de plateau à la paire de demi-cônes à soulever. Cette tige pourra être actionnée par un moteur, par un vérin pneumatique ou hydraulique, ou tout autre moyen équivalent.

Les cycles de la tige de poussée seront synchronisés avec ceux du tiroir pour assurer un fonctionnement harmonieux de la machine.

De préférence, les demi-cônes passeront lors de leur ascension au travers d'un alésage pratiqué dans une pièce rapportée directement sous le poste d'assemblage, ce qui permet tout à la fois de maintenir, guider et centrer les demi-cônes avant leur introduction dans la coupelle.

Le poussoir en transition entre la position basse et la position haute interdit l'avancée des demi-cônes suivants, n'autorisant leur déplacement que lorsqu'il est en position basse.

D'autres caractéristiques et avantages apparaîtront plus clairement à la lumière de la description qui suit des figures annexées, parmi lesquelles :
- la figure 1 est une vue de dessus de la machine montrant l'agencement général des moyens mis en oeuvre pour réaliser le procédé de l'invention,
- la figure 2 est une vue de face de cette même machine,
- la figure 3 montre les couloirs d'amenée et d'évacuation des coupelles,
- la figure 4 montre le couloir d'amenée des demi-cônes,
- la figure 5 illustre un second mode de mise en oeuvre du procédé,
- la figure 6 illustre un troisième mode de mise en oeuvre du procédé.

La machine se compose d'un châssis 1 dans lequel ont été creusés un canal d'amenée 2 des coupelles vides ainsi que des canaux d'évacuation 3 et 4 des coupelles équipées. Ces canaux sont respectivement en regard du couloir d'amenée 5 des coupelles vides, par lesquelles les coupelles vides sont amenées dans le sens indiqué 29, et des couloirs d'évacuation 6 et 7 des coupelles équipées dont les sens d'évacuation sont 28 et 30.

Le châssis est équipé d'un tiroir 8 à deux positions susceptibles de se déplacer selon une direction orthogonale à la direction des canaux d'amenée et d'évacuation. Ce tiroir 8 comprend deux réceptacles 9 et 10 destinés à recevoir des coupelles, dont la forme générale prolonge celle des canaux d'amenée et d'évacuation, pour se terminer par une extrémité circulaire faisant office d'obstacle sur lequel butte la coupelle qui est introduite dans le réceptacle.

Ce tiroir 8 est percé de trous 12 et 13 destinés à permettre le soufflage des coupelles équipées en vue de leur évacuation.

Le tiroir 8 est monté mobile coulissant dans le châssis 1 et manoeuvré par l'intermédiaire d'un vérin 31 relié par un liaison 35 au tiroir 8. Ce vérin actionne le tiroir 8 par l'intermédiaire d'une tige 34 coulissant dans la chemise du vérin 31 dont les deux chambres sont alimentées par les arrivées 32 et 33 de fluide.

Les deux positions du tiroir 8 sont délimitées par les butées 22 et 23 permettant un positionnement précis des réceptacles 9 et 10 en face des canaux d'amenée ou d'évacuation 6 et 7.

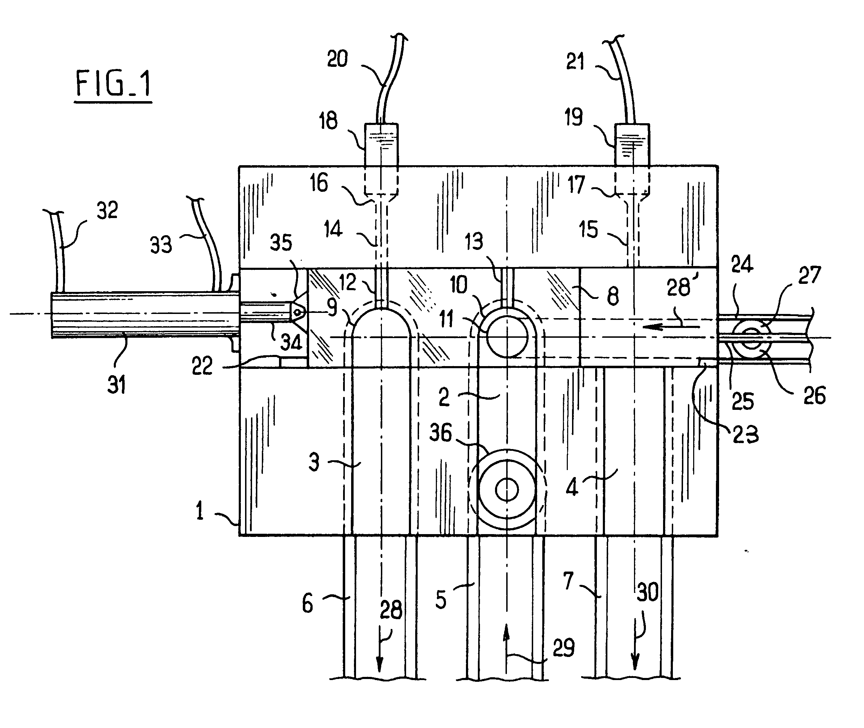

Dans la position représentée à la figure 1, le trou 12 coïncide avec un orifice 14 ménagé dans le châssis 1 qui est en communication avec une cavité 16 recevant une buse 18 alimentée en l'air via le tuyau 20. La coupelle équipée se trouvant dans le réceptacle subit ainsi le soufflage de la buse 20, et est évacuée dans le canal 3 puis dans le couloir d'évacuation 6.

Quant au réceptacle 10, il se trouve aligné sur le canal d'amenée 2 et est à même de recevoir une coupelle vide 36.

On imaginera aisément le tiroir dans l'autre position en arrêt sur la butée 23, dans laquelle le réceptacle 9 est en regard du canal d'amenée 2, et le réceptacle 10 est en regard du canal d'évacuation 7. Dans cette position, le trou 13 pratiqué dans le tiroir 8 est en regard d'un orifice 15 pratiqué dans le châssis 1 qui communique avec une cavité 17 recevant la buse 19 alimentée en air par le tuyau 21.

Les ensembles 3,6,18 et 4,7,19 forment chacun un dispositif d'évacuation des coupelles équipées.

Sur cette figure 1, on distingue le couloir d'amenée 24 des demi-cônes 26, 27 selon le sens 28, équipée d'une cloison centrale verticale 25 destinée à empêcher les demi-cônes de tourner ou de tomber lors de leur transport dans le couloir.

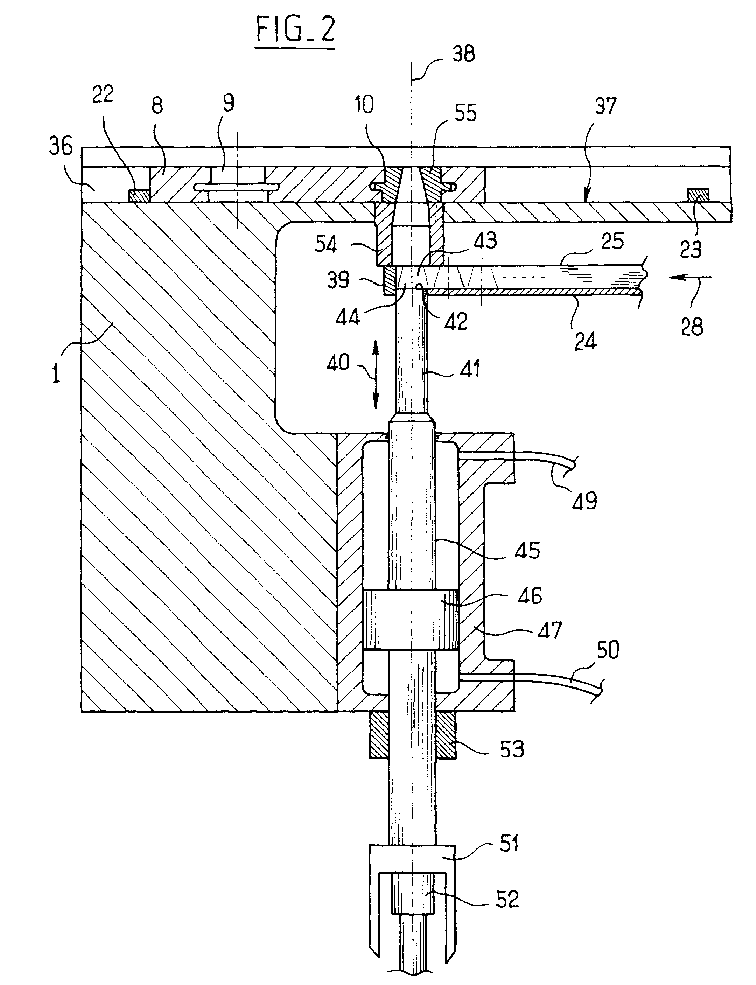

Sur la figure 2, qui est une vue de face du dispositif décrit au regard de la figure 1, sur laquelle a été omis le dispositif de commande de tiroir, pour plus de clarté, on distingue le tiroir 8 en coupe muni de ses réceptacles 9 et 10 dont la section est conformée à la forme extérieure des coupelles. Ce tiroir coulisse dans une rainure 36 pratiquée dans le châssis 1 en prenant appui sur un fond plat 37. La course du tiroir est délimitée par les butées 22 et 23. Le réceptacle 10 fait ici office de poste d'assemblage coïncidant avec l'axe vertical 38. Sous le réceptacle 10, on distingue un guide 54 destiné à guider et centrer des demi-cônes 43 lors de leur introduction dans une coupelle 55 se trouvant dans le réceptacle 10. Sous ce guide (54), on distingue le couloir d'amenée 24 des demi-cônes muni de sa cloison verticale 25 aboutissant au poste d'attente 44 situé à la verticale du réceptacle 10 selon l'axe 38. Ce poste d'attente a pour plancher l'extrémité 42 d'un poussoir 41 en position basse, et comprend une butée 39 permettant d'arrêter les demi-cônes sur ce poste d'attente.

Ce poussoir 41 est solidaire d'une tige 45 d'un vérin 47 lié au châssis 1. Un piston 46 lié à la tige 45 délimite deux chambres alimentées respectivement par des arrivées 49 et 50 de fluide. Les positions basses et hautes du poussoir sont définies par la butée d'un élément 51 lié à la tige 45 du vérin 47 sur deux obstacles 53 et 52 solidaires du châssis 1.

Dans la position représentée, l'extrémité 42 du poussoir 41 affleure au niveau du plancher du couloir 24, et peut recevoir un ensemble appairé de demi-cônes 43.

Le poussoir 41 est destiné à pousser la paire de demi-cônes positionnée dans le poste d'attente 44 au travers du guide 54, pour les introduire dans la coupelle 55 positionnée dans le réceptacle 10.

En position haute, l'extrémité 42 du poussoir 41 affleure sur le fond 37 du châssis 1. Le tiroir est alors libre de coulisser et d'emmener avec lui les demi-cônes 43 dans la coupelle 55, puisque le poussoir 41 ne fait pas obstacle à son déplacement.

Le cycle de fonctionnement de la machine est donc le suivant :

Sous l'effet de la poussée des éléments qui les suivent, un ensemble appairé de demi-cônes 43 est introduit en position dans le poste d'attente 44 et une coupelle 55 est amenée dans le réceptacle 10. On actionne alors la tige 45 pour élever les demi-cônes 43 dans l'évidement conique de la coupelle 55. Le tiroir 8 est alors déplacé pour mettre ce réceptacle 10 en regard de le canal d'évacuation 7. Dans cette position, le réceptacle 9 est en regard du canal d'amenée des coupelles 2, et reçoit automatiquement une coupelle vide. On descend alors la tige 45 jusqu'à ce que l'extrémité 42 du poussoir 44 affleure le plancher du couloir d'amenée des demi-cônes 24. Une paire de demi-cônes peut alors être acceptée sur le poste d'attente 44. La tige 45 est alors remontée pour introduire le demi-cône dans la coupelle présente dans le réceptacle 9, et ainsi de suite. Le dispositif ainsi décrit est très simple à mettre en oeuvre, et peu coûteux. Il ne nécessite que deux actionneurs à deux positions. Leur séquencement est très simple, et la cadence d'assemblage peut-être très élevée.

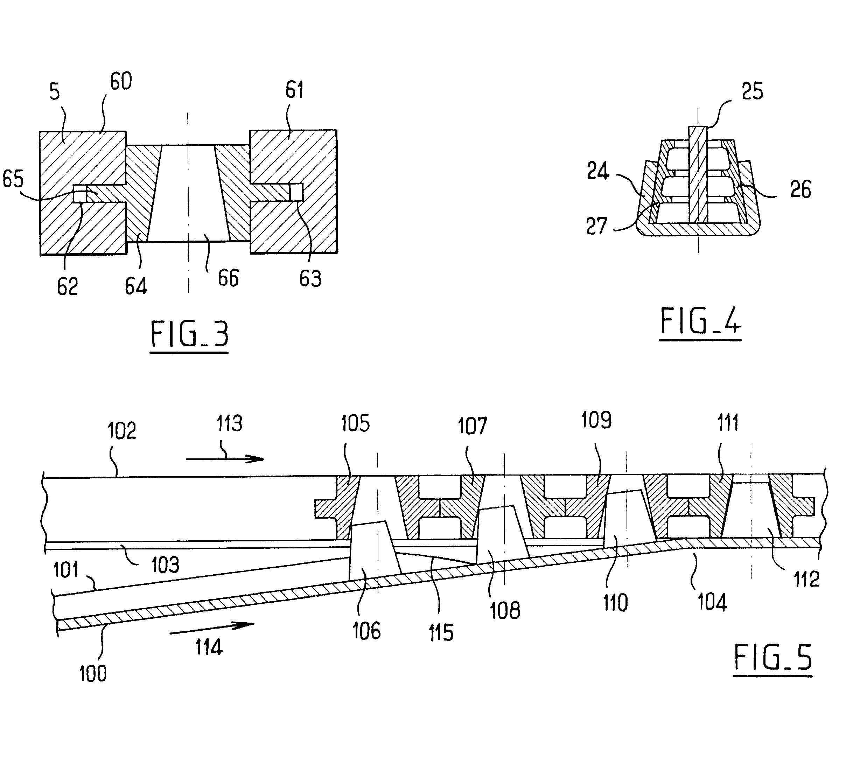

La figure 3 illustre la conformation des flancs des canaux d'amenée 2 et d'évacuation 3 et 4. La description qui suit est valable aussi pour les couloirs d'amenée 5 et d'évacuation 6 et 7. Sur cette figure, On distingue que le canal 2 possède des flancs 60 et 61 dans lesquels sont ménagées des rainures 62 et 63 destinés à recevoir la collerette 65 d'une coupelle 64, dont l'évidement conique 66 a sa pointe dirigée vers le haut.

La figure 4 montre l'agencement du couloir d'amenée 24 des demi-cônes 26 et 27 qui se présentent en paire reconstituant le cône complet, séparés par une cloison verticale centrale 25 destinée à guider ces demi-cônes.

La figure 5 illustre quant à elle un second mode de mise en oeuvre du procédé de l'invention. Il comporte un couloir d'amenée oblique 100 des demi-cônes appairés de façon à reconstituer le cône complet, muni d'une cloison verticale séparatrice 101, et acheminant les demi-cônes dans le sens 114. Ce couloir d'amenée 100 se situe sous un couloir horizontal 102 d'amenée des coupelles dans le sens 113 dont les flancs sont conformés à la forme extérieure des coupelles. Le couloir 100 d'amenée des demi-cônes tangente le couloir 102 d'amenée des coupelles et son fond constitue alors le plancher du couloir d'évacuation des coupelles équipées, commençant au point de transition 104 au delà duquel les demi-cônes sont parfaitement introduits dans la coupelle. Les paires de demi-cônes sont espacées par un moyen non représenté ici, de façon à pouvoir s'introduire chacune dans l'évidement conique d'une coupelle en surplomb. On distingue la pénétration des progressive des paires de demi-cônes 106, 108, et 110 dans les coupelles correspondantes 105, 107 et 109, pour parvenir finalement au parfait positionnement des demi-cônes 112 dans la coupelle 111. La cloison séparatrice 101 s'achève par un biais 115 destiné à libérer progressivement les demi-cônes afin qu'ils se centrent d'eux-mêmes dans l'évidement conique de la coupelle.

On a ainsi réalisé simplement au moyen d'un mouvement continu la mise en oeuvre du procédé de l'invention.

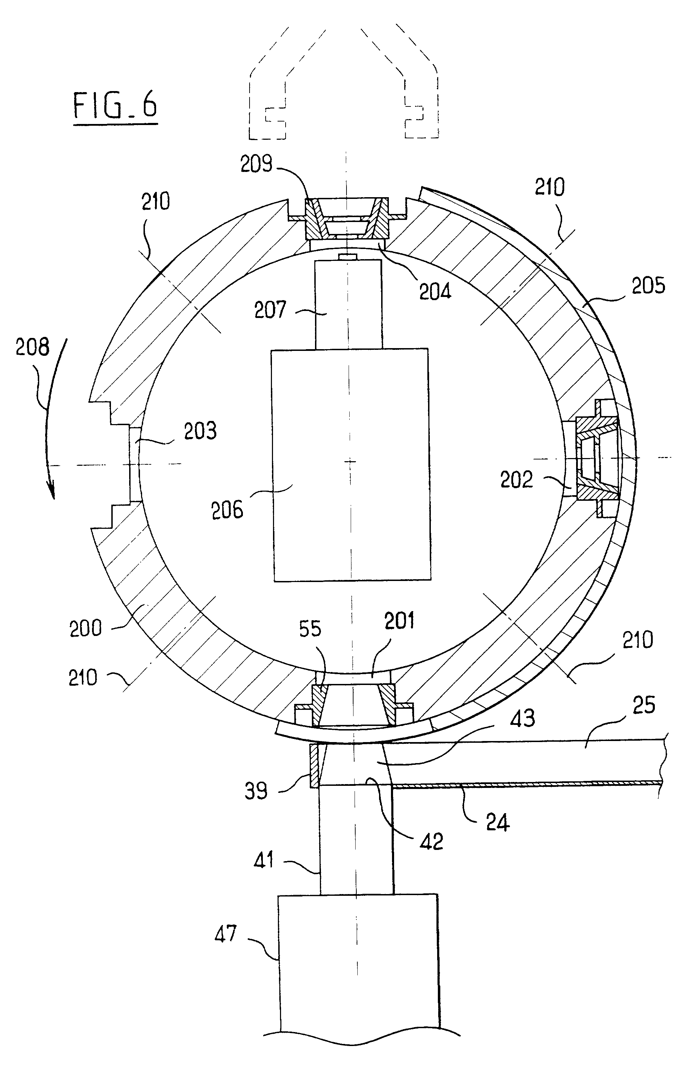

Enfin, la figure 6 illustre un troisième mode de mise en oeuvre du procédé de la première revendication. Il vise à la fois l'équipement des coupelles de demi-cônes, et le retournement de celle-ci une fois équipée pour sa préhension par le mécanisme qui la pose sur la queue se soupape. On connaît un moyen de retournement qui consiste à vriller de 180 degrés le couloir d'évacuation. On évite ce procédé en prévoyant un tiroir circulaire 200 tournant selon un axe horizontal, et comportant plusieurs réceptacles 201,202,203 et 204. Bien sûr, rien n'interdit d'en disposer plus, notamment dans des positions angulaires 210.

Le réceptacle en position basse 201 sert de poste d'assemblage. Conformément à la machine décrite aux figures 1 et 2, les coupelles sont amenées par un couloir d'amenée non représenté s'étendant horizontalement et perpendiculairement au plan de rotation du tiroir circulaire 200. On distingue le couloir 24 d'amenée des demi-cônes appairés muni de sa cloison verticale 25, de sa butée 39. Comme auparavant, le poussoir 41 actionné par le vérin 47 pousse les demi-cônes 43 amenés sur sa face d'appui 42 dans la coupelle 55 en surplomb de ceux-ci.

Le tiroir circulaire 200 tourne alors dans le sens 208 pour amener progressivement la coupelle équipée jusqu'en position de présentation 204, sensiblement à la verticale de la position d'assemblage.

Pendant la rotation du tiroir circulaire 200, les demi-cônes et les coupelles sont maintenus en position dans leur réceptacle par le guide circulaire 205 en périphérie du tiroir circulaire 200. Par ailleurs, lors de la transition entre deux positions d'arrêt angulaire du tiroir circulaire 200, les coupelles contenues dans le dispositif d'amenée ne peuvent avancer, car elles butent sur la face du tiroir circulaire 200.

Parvenu en position de présentation 204, la coupelle équipée 209 est poussée vers le haut par le poussoir 207 animé par le vérin 206, jusqu'à l'extraire du tiroir circulaire 200 pour permettre sa préhension par un mécanisme esquissé sur la figure qui réalise la pose de la coupelle équipée sur la queue de soupape.

On a ainsi réalisé dans le même temps l'équipement de la coupelle de ses demi-cônes, et le retournement de celle-ci pour la présenter du bon côté au mécanisme de pose sur la queue de soupape.

On peut aussi envisager des arrivées de coupelles et de demi-cônes tangentielles au tiroir circulaire 200, de façon à réaliser l'introduction des demi-cônes dans les coupelles à l'instar du dispositif décrit à la figure 5, l'espacement des demi-cônes pouvant être réalisé par des gabarits solidaires du tiroir circulaire 200. On économise ainsi le poussoir 41 et son dispositif de manoeuvre.

## Revendications

1. Procédé pour garnir de manière automatique une coupelle (55) possédant un évidement conique avec une paire de demi-cônes (43), selon lequel on agence la paire de demi-cônes (43) pour reconstituer le cône complet, on amène la coupelle (55) et la paire de demi-cônes (43) en alignement vertical, et on introduit la paire de demi-cônes (43) dans la coupelle (55) par un mouvement vertical relatif, **caractérisé en ce que** le cône formé par les demi-cônes (43) et le cône de l'évidement conique de la coupelle (55) ont leur pointe dirigée vers le haut, et **en ce que** la coupelle (55) est en surplomb des demi-cônes (43).

2. Procédé selon la revendication 1, **caractérisé en ce que** l'on rend stationnaire la coupelle (55) et **en ce que** l'on imprime un mouvement ascendant positif aux demi-cônes (43).

3. Machine pour mettre en oeuvre le procédé selon la revendication 2, comportant au moins un dispositif d'amenée (24,25) des demi-cônes (43) vers un poste d'attente (44), au moins un dispositif d'amenée (5,2) des coupelles (55) vers un poste d'assemblage (10), au moins un dispositif d'introduction (41,45,46,47) des demi-cônes (43) dans la coupelle (55) et au moins un dispositif d'évacuation (3,6,18 et 4,7,19) des coupelles équipées, **caractérisée en ce que** le dispositif d'introduction (41,45,46,47) des demi-cônes (43) dans la coupelle (55) comporte un poussoir mobile (41) verticalement entre une position basse et une position haute, dont l'extrémité en position basse (42) est la base du poste d'attente (44).

4. Machine selon la revendication 3, **caractérisée en ce que** le moyen d'amenée (24,25) des demi-cônes est un couloir (24) sensiblement horizontal dans lequel les demi-cônes (43) sont disposés par paires et sont posés sur leur grande base, ce couloir (24) comportant une cloison médiane verticale (25).

5. Machine selon la revendication 3, **caractérisée en ce que** les moyens d'amenée (2,5) et d'évacuation des coupelles (3,6,18 et 4,7,19) comportent des canaux (2,3,4) et des couloirs (5,6,7) dont les flancs (60,61) sont conformés à la forme extérieure des coupelles.

6. Machine selon la revendication 3, **caractérisée en ce qu'**elle comprend un tiroir (8) horizontal à deux positions dans lequel est aménagé un réceptacle (9,10) recevant les coupelles (55), dont une position est en surplomb du poste d'attente (44) des demi-cônes et en regard du dispositif d'amenée (2,5) des coupelles vides (55), et l'autre position est en regard du dispositif d'évacuation (3,6,18 ou 4,7,19) des coupelles équipées.

7. Machine selon la revendication 3, **caractérisée en ce que** le tiroir (8) est pourvu de deux réceptacles (9,10), de telle façon que dans la première position du tiroir (8), le premier des réceptacles est en surplomb du poste d'attente (44) des demi-cônes (43) et en regard du dispositif d'amenée (2,5) des coupelles vides (55), et le deuxième réceptacle est en regard d'un dispositif d'évacuation (3,6,18), et dans la deuxième position, le deuxième réceptacle prend la place du premier réceptacle, et le premier réceptacle est en regard d'un second dispositif d'évacuation (4,7,19).

8. Machine selon la revendication 3, **caractérisée en ce que** dispositif d'évacuation (3,6,18 et 4,7,19) des coupelles équipées comporte au moins un moyen de soufflage (18,19).

9. Machine selon la revendication 3, **caractérisée en ce que** le dispositif d'introduction (41) est équipé d'un guide (54) permettant de centrer et de guider les demi-cônes (43) lors de leur introduction dans la coupelle (55).

10. Procédé selon la revendication 1, **caractérisé en ce que** la coupelle et les demi-cônes appairés sont amenés en position d'introduction selon des trajectoires convergentes, dont le rapprochement progressif génère le mouvement vertical relatif d'introduction.

11. Machine pour réaliser le procédé selon la revendication 10, comprenant un couloir d'amenée des coupelles (102), un couloir d'amenée des demi-cônes appairés (100), et un dispositif d'espacement des demi-cônes, **caractérisé en ce que** les couloirs d'amenée des coupelles et des demi-cônes convergent pour coïncider en un couloir d'évacuation des coupelles équipées.

12. Machine selon la revendication 3, **caractérisé en ce qu'**elle comporte un tiroir circulaire (200) doté d'au moins un réceptacle (201,202,203,204) mobile en rotation entre une position basse d'assemblage (201) et une position haute de présentation (204).

## Claims

1. A method of automatically fitting a pair of half-cones (43) in a cup (55) possessing a conical recess, in which the pair of half-cones (43) is arranged to reconstitute a complete cone, the cup (55) and the pair of half-cones (43) are brought into vertical alignment, and the pair of half-cones (43) is inserted into the cup (55) by a vertical relative movement, the method being **characterized in that** the cone formed by the half-cones (43) and the cone of the conical recess in the cup (55) have their small ends pointing upwards, and **in that** the cup (55) is placed vertically above the half-cones (43).

2. A method according to claim 1, **characterized in that** the cup (55) is held stationary, and **in that** positive upward movement is imparted to the half-cones (43).

3. A machine for implementing the method of claim 2, the machine comprising at least one delivery device (24, 25) for delivering half-cones (43) to a waiting station (44), at least one delivery device (5, 2) for delivering cups (55) to an assembly station (10), at least one insertion device (41, 45, 46, 47) for inserting the half-cones (43) into the cup (55), and at least one removal device (3, 6, 18 and 4, 7, 19) for removing the fitted cups, the machine being **characterized in that** the insertion device (41, 45, 46, 47) for inserting the half-cones (43) into the cup (55) comprises a pusher (41) vertically movable between a low position and a high position, the end of the pusher in the low position (42) constituting the base of the waiting station (44).

4. A machine according to claim 3, **characterized in that** the half-cone delivery means (24, 25) comprise a substantially horizontal passage (24) in which the half-cones (43) are disposed in pairs standing on their large bases, the passage (24) including a vertical middle partition (25).

5. A machine according to claim 3, **characterized in that** the cup delivery means (2, 5) and removal means (3, 6, 18 and 4, 7, 19) comprise channels (2, 3, 4) and passages (5, 6, 7) having flanks (60, 61) shaped to match the outside shape of the cups.

6. A machine according to claim 3, **characterized in that** it includes a two-position horizontal slide (8) having formed therein a receptacle (9, 10) for receiving the cups (55), one position thereof overlying the half-cone waiting station (44) and facing the device (2, 5) for delivering the empty cups (55), and the other position thereof facing the device (3, 6, 18 or 4, 7, 19) for removing fitted cups.

7. A machine according to claim 6, **characterized in that** the slide (8) is provided with two receptacles (9, 10) so that when the slide (8) is in the first position, the first receptacle overlies the half-cone waiting station (44) and faces the empty cup delivery device (2, 5), while the second receptacle faces a removal device (3, 6, 18), and in the second position, the second receptacle takes the place of the first receptacle while the first receptacle faces a second removal device (4, 7, 19).

8. A machine according to claim 3, **characterized in that** the device (3, 6, 18 and 4, 7, 19) for removing fitted cups include at least one blower means (18, 19).

9. A machine according to claim 3, **characterized in that** the insertion device (41) is fitted with a guide (54) enabling the half-cones (43) to be centered and guided while they are being inserted into the cup (55).

10. A method according to claim 1, **characterized in that** the cup and the paired half-cones are brought into the insertion position along converging trajectories, with the progressive approach thereof generating the insertion vertical relative movement.

11. A machine for implementing the method according to claim 10, the machine including a passage (102) for delivering cups, a passage (100) for delivering paired half-cones, and a device for spacing the half-cones apart, the machine being **characterized in that** the cup and half-cone delivery passages converge so as to coincide as a passage for removing fitted cups.

12. A machine according to claim 3, **characterized in that** it includes a circular slide (200) provided with at least one receptacle (201, 202, 203, 204) that is movable in rotation between a low position (201) for assembly and a high position (204) for presentation.

## Patentansprüche

1. Verfahren zum automatischen Bestücken eines eine konische Aussparung aufweisenden Federtellers (55) mit einem Paar Halbkegel (43), gemäß dem das Paar Halbkegel (43) derart angeordnet wird, dass der gesamte Kegel hergestellt ist, der Federteller (55) und das Paar Halbkegel (43) vertikal ausgerichtet werden und das Paar Halbkegel (43) durch eine relative Vertikalbewegung in den Federteller (55) eingeführt wird, **dadurch gekennzeichnet, dass** die Scheitel des von dem Paar Halbkegel (43) gebildeten Kegels und des Kegels der konischen Aussparung des Federtellers (55) nach oben weisen und der Federteller (55) senkrecht über den Halbkegeln (43) steht.

2. Verfahren nach Anspruch 1, **dadurch gekennzeichnet, dass** der Federteller (55) stationär gehalten wird und die Halbkegel (43) zu einer positiven Bewegung nach oben gebracht werden.

3. Vorrichtung zur Umsetzung des Verfahrens nach Anspruch 2, umfassend zumindest eine Vorrichtung (24, 25) zum Heranführen der Halbkegel (43) an eine Wartestation (44), zumindest eine Vorrichtung (5, 2) zum Heranführung der Federteller (55) in eine Montagestation (10), zumindest eine Vorrichtung (41, 45, 46, 47) zum Einführen der Halbkegel (43) in den Federteller (55) und zumindest eine Vorrichtung (3, 6, 18 und 4, 7, 19) zum Entnehmen der bestückten Federteller, **dadurch gekennzeichnet, dass** die Vorrichtung (41, 45, 46, 47) zum Einführen der Halbkegel (43) in den Federteller (55) einen vertikal zwischen einer unteren und einer oberen Position bewegbaren Stößel (41) umfasst, dessen Ende in der unteren Position (42) die Basis der Wartestation (44) bildet.

4. Vorrichtung nach Anspruch 3, **dadurch gekennzeichnet, dass** die Vorrichtung (24, 25) zum Heranführen der Halbkegel eine im wesentlichen horizontale Bahn (24) ist, in der die Halbkegel (43) in Paaren angeordnet sind und auf ihrer großen Basis aufliegen, wobei die Bahn (24) eine vertikale zentrale Wand (25) hat.

5. Vorrichtung nach Anspruch 3, **dadurch gekennzeichnet, dass** die Vorrichtung (2, 5) zum Heranführen und die Vorrichtung (3, 6, 18 und 4, 7, 19) zum Entnehmen der Federteller Kanäle (2, 3, 4) und Bahnen (5, 6, 7) umfassen, deren Seiten (60, 61) der äußeren Form der Federteller entsprechen.

6. Vorrichtung nach Anspruch 3, **dadurch gekennzeichnet, dass** sie ein horizontales Schiebeelement (8) mit zwei Positionen umfasst, in dem ein Aufnahmeelement (9, 10) zur Aufnahme der Federteller (55) angeordnet ist, das in einer Position senkrecht über der Wartestation (44) der Halbkegel steht und sich gegenüber der Vorrichtung (2, 5) zum Heranführen der leeren Federteller (55) befindet und sich in der anderen Position gegenüber der Vorrichtung (3, 6, 18 oder 4, 7, 19) zum Entnehmen der bestückten Federteller befindet.

7. Vorrichtung nach Anspruch 3, **dadurch gekennzeichnet, dass** das Schiebeelement (8) derart mit zwei Aufnahmeelementen (9, 10) ausgestattet ist, dass das erste der Aufnahmeelemente bei einer ersten Position des Schiebeelements (8) senkrecht über der Wartestation (44) der Halbkegel (43) steht und sich gegenüber der Vorrichtung (2, 5) zum Heranführen der leeren Federteller (55) befindet und sich das zweite Aufnahmeelement gegenüber einer Entleerungsvorrichtung (3, 6, 18) befindet, während das zweite Aufnahmeelement bei der zweiten Position den Platz des ersten Aufnahmeelements einnimmt und sich das erste Aufnahmeelement gegenüber einer zweiten Entleerungsvorrichtung (4, 7, 19) befindet.

8. Vorrichtung nach Anspruch 3, **dadurch gekennzeichnet, dass** die Vorrichtung (3, 6, 18 und 4, 7, 19) zum Entnehmen der bestückten Federteller zumindest eine Blasevorrichtung (18, 19) umfasst.

9. Vorrichtung nach Anspruch 3, **dadurch gekennzeichnet, dass** die Einführvorrichtung (41) mit einer Führung (54) ausgestattet ist, die es ermöglicht, die Halbkegel (43) beim Einführen in den Federteller (55) zu zentrieren und zu führen.

10. Verfahren nach Anspruch 1, **dadurch gekennzeichnet, dass** der Federteller und die im Paar angeordneten Halbkegel entlang konvergierender Bahnen in die Einführposition gebracht werden, deren progressive Annäherung die relative Vertikal-Einführbewegung erzeugt.

11. Vorrichtung zur Umsetzung des Verfahrens nach Anspruch 10, umfassend eine Bahn (102) zum Heranführen der Federteller, eine Bahn (100) zum Heranführen der Halbkegel und eine Vorrichtung zum Beabstanden der Halbkegel, **dadurch gekennzeichnet, dass** die Bahnen zum Heranführen der Federteller und der Halbkegel derart konvergent sind, dass sie in einer Bahn zum Entnehmen der bestückten Federteller zusammenlaufen.

12. Vorrichtung nach Anspruch 3, **dadurch gekennzeichnet, dass** sie ein kreisförmiges Schiebeelement (200) umfasst, das mit zumindest einem Aufnahmeelement (201, 202, 203, 204) ausgestattet ist, das von einer unteren Montageposition (201) in eine obere Darbietungsposition (204) drehbar ist.
